# EUROPEAN PATENT APPLICATION

(11) **EP 3 736 472 A1**
(43) Date of publication of application: **11.11.2020**
(21) Application number: 20157574.3
(22) Date of filing: 17.02.2020
(51) Int. Cl.: F16J 15/06, A62C 2/06, E04B 1/94

(54) **CAVITY WALL TRAY APPARATUS**

(30) Priority: 07.05.2019 GB 201906402; 28.05.2019 GB 201907489
(71) Applicant: Intumescent Systems Limited, Barfrestone Dover Kent CT15 7JG (GB)
(72) Inventor: Ward, Derek, Dover, Kent CT15 7JG (GB)
(74) Representative: Fry, David John

(57) **Abstract**

A sealed cavity tray (10) which extends between cavity walls (12, 14) of a building comprises a flexible sealed envelope which, in use, extends between said cavity walls and houses a quantity of a material which intumesces in the presence of excessive heat.

## Description

This invention relates to cavity tray apparatus for location between cavity walls of a building.

Whereas wall cavities in buildings provide effective protection against external dampness permeating the internal walls of the building, these cavities also provide relatively open spaces through which smoke and flames can speedily spread from a fire source to other areas of a building.

The present invention provides cavity tray apparatus which provides protection against the spread of smoke and fire through the wall cavities of a building.

In one aspect, the invention provides a sealed cavity tray for extending between cavity walls of a building, the sealed cavity tray comprising a flexible sealed envelope which, in use, is attached to and extends between said cavity walls and which houses a quantity of a material which intumesces in the presence of excessive heat.

When located in a wall cavity, the cavity tray is preferably inclined.

Fixings may be provided for attaching the cavity tray to adjoining cavity walls.

The sealed cavity tray may be employed in combination with a cavity brick vent comprising an open-sided brick-shaped housing formed with a ventilated metallic front wall bordered by non-ventilated metallic side, upper and lower walls, at least one of said walls being coated internally with a material which intumesces in the event of excessive heat.

In another aspect, the invention provides in combination a sealed cavity tray for extending between cavity walls of a building, the sealed cavity tray comprising a flexible sealed envelope which, in use, extends between said cavity walls and which houses a quantity of a material which intumesces in the presence of excessive heat, and a cavity brick vent comprising an open-sided brick-shaped housing formed with a ventilated metallic front wall bordered by non-ventilated metallic side, upper and lower walls, at least one of said walls being coated internally with a material which intumesces in the event of excessive heat.

In a further aspect, the invention provides a cavity brick vent comprising an open-sided brick-shaped housing formed with a ventilated metallic front wall bordered by non-ventilated metallic side, upper and lower walls, at least one of said walls being coated internally with a material which intumesces in the event of excessive heat.

The invention will now be described by way of example only with reference to the accompanying drawings in which:
Figure 1 is an isometric view of a cavity tray in accordance with the invention located between cavity walls of a building;
Figure 2 is a side view of a cavity tray in accordance with the invention located between walls of a building;
Figure 3 is an isometric view of a fire brick vent in accordance with the invention: and
Figure 4 is a side view of a cavity tray and fire brick vent in accordance with the invention located between walls of a building.

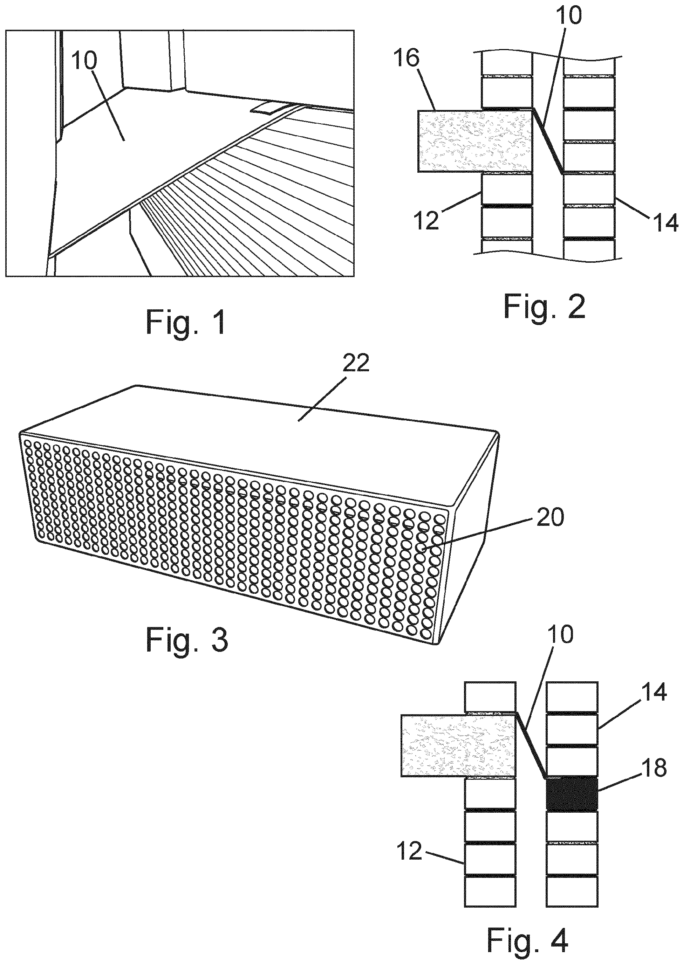

In Figures 1 and 2 a sealed cavity tray 10 is shown positioned between an internal wall 12 and an opposed external wall 14 of the building. The cavity tray comprises a flexible sealed envelope comprising reinforced silver cloth which houses a quantity of a material which intumesces in the event of excessive heat such as may be occasioned by a fire occurring in the building. The intumescent material preferably forms part of a sheet which locates within the envelope.

The walls 12, 14 together define a length of the cavity space of the building. Opposed sides 12 of the cavity tray are retained firmly between pairs of super-imposed bricks or a combination of bricks and blocks 16, and the cavity tray is inclined with respect to the opposed walls. As shown, the cavity tray is inclined whereby its side connected to the inner wall 12 is positioned above its side connected to the external wall 14.

Positioned over the cavity tray 10 is a sheet 20 of galvanised mesh, the upper and lower edges of the sheet 20 being secured in place by the brick courses above and below cavity tray. Typically the dimensions of the mesh slots are 12mm x 30mm.

As shown in Figures 3 and 4, the brick below the connection of the cavity tray to the outside wall 14 is replaced by an open-sided brick-shaped housing 18 formed with a metallic front wall 20 bordered by non-ventilated metallic side, upper and lower walls 22. One or more walls of the housing 18 is coated internally with a solution containing an intumescent material.

In use, a suitably sized brick may be located within the housing 18.

It will be appreciated that the foregoing is merely exemplary of apparatus in accordance with the invention and that modifications can readily be made without departing from the scope of the invention as set out in the appended claims.

## Claims

1. A sealed cavity tray for extending between cavity walls of a building, the sealed cavity tray comprising a flexible sealed envelope which, in use, is attached to and extends between said cavity walls and which houses a quantity of a material which intumesces in the presence of excessive heat.

2. A cavity tray as claimed in claim 1 wherein fixings are provided for attaching the cavity tray to adjoining cavity walls.

3. A cavity tray as claimed in claim 1 or claim 2 in combination with a sheet of galvanised mesh, which, in use, lies above the cavity tray.

4. A cavity tray as claimed in any one of the preceeding claims wherein the sealed cavity tray is employed in combination with a cavity brick vent which comprises an open-sided brick-shaped housing formed with a ventilated metallic front wall bordered by non-ventilated metallic side, upper and lower walls, at least one of said walls being coated internally with a material which intumesces in the event of excessive heat.

5. A sealed cavity tray for extending between cavity walls of a building, the sealed cavity tray comprising a flexible sealed envelope which, in use, extends between said cavity walls and which houses a quantity of a material which intumesces in the presence of excessive heat, and a cavity brick vent comprising an open-sided brick-shaped housing formed with a ventilated metallic front wall bordered by non-ventilated metallic side, upper and lower walls, at least one of said walls being coated internally with a material which intumesces in the event of excessive heat.

6. A cavity brick vent comprising an open-sided brick-shaped housing formed with a ventilated metallic front wall bordered by non-ventilated metallic side, upper and lower walls, at least one of said walls being coated internally with a material which intumesces in the event of excessive heat.
